# EUROPÄISCHE PATENTANMELDUNG

(11) **EP 0 927 517 A1**
(43) Veröffentlichungstag der Anmeldung: **07.07.1999**
(21) Anmeldenummer: 98118830.3
(22) Anmeldetag: 06.10.1998
(51) Int. Cl.: A01N 65/00

(54) **Pflanzenbehandlungsmittel auf Dinkelbasis und Verfahren zu dessen Herstellung**

(30) Priorität: 23.12.1997 DE 29722774 U
(71) Anmelder: evo-Silicatforschung GmbH, 89075 Ulm (DE)
(72) Erfinder: Appel, Karin, 89075 Ulm (DE)
(74) Vertreter: KOHLER SCHMID + PARTNER

(57) **Zusammenfassung**

Ein Pflanzenbehandlungsmittel auf der Basis von 2/3 bis 4/5, vorzugsweise etwa 3/4 Volumenanteilen Wasser, umfaßt 1/5 bis 1/3, vorzugsweise etwa 1/4 Volumenanteil Dinkelspelz-Extrakt und eine Zugabe von Silizium und/oder Siliziumverbindungen von weniger als 1‰, vorzugsweise in der Größenordnung 1 ppm zum Gesamtvolumen. Die Zugabe von Siliziumverbindungen enthält i.w. Siliziumdioxid, insbesondere in Form von Quarzpulver. Damit wird ein in seiner positiven Wirkung möglichst vielseitiges, für Mensch und Tier unschädliches, insbesondere ungiftiges, biologisch abbaubares und auf in der Natur vorkommenden Substanzen beruhendes Pflanzenbehandlungsmittel vorgestellt, welches sowohl zur Düngung im Boden als auch zur Krankheits- und/oder Schädlingsbekämpfung direkt auf den zu behandelnden Pflanzen angewendet werden kann und welches einfach und preisgünstig in beliebigen Mengen ohne schädliche Eingriffe in die Natur herstellbar und verwendbar ist.

## Beschreibung

Die Erfindung betrifft ein Pflanzenbehandlungsmittel auf der Basis von Wasser, einem organischen Bestandteil und Silizium, ein Verfahren zu dessen Herstellung sowie verschiedene Verwendungen des Pflanzenbehandlungsmittels.

Ein derartiges Pflanzenbehandlungsmittel ist beispielsweise aus der WO 94/09626 A1 bekannt.

Auf dem Markt gibt es eine unübersehbare Anzahl von chemischen Pflanzenbehandlungsmitteln, die in der chemischen Industrie aus künstlichen Komponenten erzeugt werden. Derartige chemische Mittel reichen von Schädlingsbekämpfungsmitteln über Fungizide und Herbizide bis hin zu künstlichen Düngemitteln. Oftmals enthalten derartige chemisch hergestellte Pflanzenbehandlungsmittel mehr oder minder starke Giftstoffe, die schädlich für Mensch und Tier sind. Zudem lassen sich die ausgebrachten Wirkstoffe in vielen Fällen nicht auf natürlichem Wege genügend rasch abbauen, so daß sie durch sukzessiven Einsatz im Boden oder auf Pflanzen akkumuliert werden, was ihre schädliche Wirkung noch erhöht.

Daneben gibt es auf dem Markt, allerdings in erheblich geringerer Anzahl, auch Pflanzenbehandlungsmittel auf der Basis von natürlich vorkommenden pflanzlichen oder tierischen Stoffen, die nach ihrer Ausbringung im natürlichen Kreislauf ohne allzu große schädliche Einwirkungen "aufgehen" können. Dazu gehören auch "alte Hausmittel" wie beispielsweise gestampfte Eierschalen zur Bodenverbesserung durch Kalziumanreicherung in kalkarmen Böden, Hornmehl zur Pflanzendüngung oder Brennesselabsud ("Brennesseljauche") zur Düngung und Blattlausbekämpfung.

Aufgabe der vorliegenden Erfindung ist es, ein in seiner positiven Wirkung möglichst vielseitiges, für Mensch und Tier unschädliches, insbesondere ungiftiges, biologisch abbaubares und auf in der Natur vorkommenden Substanzen beruhendes Pflanzenbehandlungsmittel vorzugstellen, welches sowohl zur Düngung im Boden als auch zur Krankheits- und/oder Schädlingsbekämpfung direkt auf den zu behandelnden Pflanzen angewendet werden kann und welches einfach und preisgünstig in beliebigen Mengen ohne schädliche Eingriffe in die Natur herstellbar und verwendbar ist.

Erfindungsgemäß wird diese Aufgabe auf ebenso einfache wie überraschend wirkungsvolle Art und Weise gelöst durch ein Pflanzenbehandlungsmittel auf der Basis von 2/3 bis 4/5, vorzugsweise etwa 3/4 Volumenanteilen Wasser, 1/5 bis 1/3, vorzugsweise etwa 1/4 Volumenanteil Dinkelspelz-Extrakt und einem Volumenteil von Silizium und/oder Siliziumverbindungen von weniger als 1‰, vorzugsweise in der Größenordnung 1 ppm zum Gesamtvolumen.

Das erfindungsgemäße Pflanzenbehandlungsmittel ist, wie weiter unten im einzelnen beschrieben wird, extrem vielfältig einsetzbar. Unter anderem zeigt es nachweisbare positive Wirkungen bei der Bodenverbesserung und Düngung, als Fungizid oder Herbizid, bei der Bekämpfung von Pflanzenschädlingen und sogar zum Schutz gegen schädliche Strahlungseinwirkungen und zur Erhöhung der Kälteverträglichkeit von behandelten Pflanzen.

Auch wird bei direkter Anwendung auf Blattpflanzen, beispielsweise Weinreben, wilder Wein, Rosen, Efeu usw. die Haltfähigkeit der Blätter stark erhöht, was einen höheren und bedeutend stärkeren Wuchs der behandelten Pflanzen zur Folge hat.

Durch ein Einarbeiten des erfindungsgemäßen Pflanzenbehandlungsmittels in Kompost oder direkt in den die Wurzeln umgebenden Boden wird eine erhebliche Bodenverbesserung und damit ein besseres Wachstum und eine erhöhte Widerstandskraft der behandelten Pflanzen beobachtet.

Das Mittel erhöht auch die Lagerfähigkeit der Früchte von behandelten Pflanzen (beobachtet beispielsweise an Quitten) und steigert in seiner Anwendung als Düngemittel die Qualität, Fertilität und Grünkraft der Pflanzen.

Aus der eingangs zitierten WO 94/09626 A1 ist ein Pflanzenbehandlungsmittel bekannt, welches als Insektizid eingesetzt werden kann, und im wesentlichen aus Wasser, organischen Bestandteilen und gegebenenfalls einer Zugabe von Siliziumdioxid besteht. Allerdings wird Siliziumdioxid als hydrophobe Komponente zu einer wässrigen Dispersion in einer Menge von 2 bis 3 Gewichts-% eingesetzt. Im Gegensatz dazu werden beim erfindungsgemäßen Pflanzenbehandlungsmittel Silizium und/oder Siliziumverbindungen in ganz erheblich geringeren Mengen beigemischt, nämlich weniger als 1‰, vorzugsweise in der Größenordnung 1 ppm zum Gesamtvolumen. Damit ist selbstverständlich die Wirkung des Siliziumdioxids in dem bekannten Pflanzenbehandlungsmittel eine vollkommen andere als im erfindungsgemäßen.

Von wesentlicher Bedeutung für das erfindungsgemäße Pflanzenbehandlungsmittel ist hingegen der organische Bestandteil "Dinkelspelz-Extrakt", der als Hauptwirkstoff im erfindungsgemäßen Pflanzenbehandlungsmittel einen Volumenanteil von 1/5 bis 1/3, vorzugsweise etwa 1/4 einnimmt. Im Gegensatz dazu enthält das aus der WO 94/09626 A1 bekannte Mittel völlig andere organische Bestandteile, die nichts mit dem erfindungsgemäßen Wirkstoff Dinkelspelz-Extrakt zu tun haben. Überdies dienen diese organischen Bestandteile in dem bekannten Insektizid nur zum Einstellen der physiko-chemischen Stabilität der Dispersion. Als eigentlicher Wirkstoff sind die organischen Substanzen dort gerade nicht eingesetzt, was auch schon daraus hervorgeht, daß sie lediglich Volumenanteile von 2 % bis maximal 8 % des bekannten Insektizids ausmachen sollen.

In der DE 43 22 939 A1 ist ein Mittel zur Abwehr von Umweltgiften und Pilzkrankheiten sowie zur Transpirationshemmung von Pflanzenteilen beschrieben, welches keine wirksamen organischen Bestandteile, insbesondere nicht den erfindungsgemäßen Hauptwirkstoff Dinkelspelzextrakt enthält. Lediglich eine kolloidale Kieselsäurelösung wird erwähnt, die einen Si0₂-Gehalt von 30 Massen-% aufweisen soll. Auch diese Konzentration liegt wiederum um viele Größenordnungen über der Siliziumzugabe von weniger als 1‰, vorzugsweise ungefähr 1 ppm relativ zum Gesamtvolumen des erfindungsgemäßen Pflanzenbehandlungsmittels.

Die DD 153 052 schließlich beschreibt ein Verfahren zur Bekämpfung von festsitzenden Muscheln, Algen und Wasserpflanzen, bei dem eine Abdeckung eines aus einer Mischung aus Wasserglaslösung und einer sauren Lösung hergestellten Hydrogels, das auch ein Herbizid enthalten kann, auf die zu schützende Fläche aufgebracht wird. Organische Wirkstoffe, insbesondere Dinkelspelz-Extrakt, werden bei dem Verfahren nach der DD 153 052 nicht eingesetzt.

Besonders bevorzugt ist eine Ausführungsform des erfindungsgemäßen Pflanzenbehandlungsmittels, bei der der DinkelspelzExtrakt aus einem Gärungsprozeß von natürlichem Dinkelspelz, vorzugsweise aus einer bakteriellen Gärung hervorgegangen ist. Durch die desxinfizierende Wirkung der Gärungsprodukte wie Alkohole und Ketone wird die herbizide und fungizide Wirkung des erfindungsgemäßen Pflanzenbehandlungsmittels, insbesondere auch seine Eignung zur Schädlingsbekämpfung erhöht.

Die Zugabe von Siliziumverbindungen umfaßt in der Regel im wesentlichen Siliziumdioxid, welches in praktisch unbegrenzter Menge besonders preiswert zur Verfügung steht.

Bei einer vorteilhaften Ausführungsform enthalten die Siliziumverbindungen Quarzpulver. Dieses kann als feinstgemahlener Sand zugegeben werden, der in beliebiger Menge in der Natur vorhanden ist und preisgünstig beschafft werden kann.

Besonders bevorzugt sind Weiterbildungen, bei denen die Zugabe von Silizium Bergkristallpulver enthält. Die beobachteten positiven Wirkungen des erfindungsgemäßen Pflanzenbehandlungsmittel treten dann besonders stark zutage.

Bei weiteren vorteilhaften Weiterbildungen kann die Zugabe von Siliziumverbindungen auch Pulver von siliziumhaltigen Halbedelsteinen wie Amethyst, Citrin, Chrysopras oder Morion enthalten.

Bei anderen vorteilhaften Weiterbildungen enthält die Zugabe von Siliziumverbindungen im erfindungsgemäßen Pflanzenbehandlungsmittel Opalpulver. Dieses kann vorteilhafterweise als Achatpulver zugegeben werden. Andere Weiterbildungen sehen die Zugabe von Karneol-, Onyx- und/oder Jaspispulver vor.

Bei einer besonders bevorzugten Ausführungsform des erfindungsgemäßen Pflanzenbehandlungsmittels ist ein Zusatz von Nadelbaum-Absud, insbesondere Fichten- oder Tannenabsud, in der Größenordnung von 5 bis 25%, vorzugsweise etwa 20% des ursprünglichen Gesamtvolumens des Pflanzenbehandlungsmittels vorgesehen. Durch die in dem Zusatz des Nadelbaum-Absudes enthaltenen Harzanteile wird insbesondere die Haftwirkung des erfindungsgemäßen Pflanzenbehandlungsmittels entscheidend erhöht, so daß bei direkter Applikation auf zu behandelnde Pflanzen ein wesentlich stärkerer Langzeiteffekt in der Wirkung des Mittels zu beobachten ist.

In einer weiteren bevorzugten Ausführungsform des erfindungsgemäßen Pflanzenbehandlungsmittels ist ein Zusatz von Lavendelabsud in der Größenordnung von 5 bis 20%, vorzugsweise etwa 10% des ursprünglichen Gesamtvolumens des Pflanzenbehandlungsmittels vorgesehen. Damit wird vor allem die Wirkung bei Blattlausbekämpfung auf Rosen oder Sitkalaus-Bekämpfung auf Kiefern erhöht.

Bei einer weiteren Ausführungsform des erfindungsgemäßen Pflanzenbehandlungsmittels schließlich ist ein Zusatz von Rosenwasser in der Größenordnung von 1 bis 5%, vorzugsweise etwa 2% des ursprünglichen Gesamtvolumens des Pflanzenbehandlungsmittels vorgesehen. Dadurch wird überraschenderweise die Haltbarkeit von Schnittblumen erheblich erhöht.

In den Rahmen der Erfindung fällt auch ein Verfahren zur Herstellung des oben beschriebenen Pflanzenbehandlungsmittels, das sich dadurch auszeichnet, daß Dinkelspelz in einem Volumenverhältnis von ungefähr 3:5 mit Wasser versetzt und vorzugsweise etwa einen halben Tag bei Zimmertemperatur eingeweicht, sodann ca. 1/4 bis 1/2 Stunde, vorzugsweise etwa 20 min, insbesondere bei Temperaturen zwischen 80°C und 120°C, vorzugsweise etwa 100°C, sowie bei Drücken von 1 atm bis 10 atm, vorzugsweise etwa 4 atm, erhitzt, insbesondere aufgekocht, anschließend abgesiebt und ausgedrückt und schließlich der so gewonnene Absud aus Dinkelspelz-Extrakt in einem Volumenverhältnis von 1:4 bis 1:2, vorzugsweise ungefähr 1:3 mit Wasser verdünnt wird, und daß das Pflanzenbehandlungsmittel mit einer Silizium-Zugabe von weniger als 1‰, vorzugsweise etwa 1 ppm des Gesamtvolumens versetzt wird. Die Silizium-Zugabe kann i.w. aus pulverförmigen Siliziumverbindungen, vorzugsweise Siliziumdioxid bestehen, aber auch als Silizium-Gel vorliegen.

Vorteilhafterweise kann die nach dem Absieben und Ausdrücken übrig bleibende Dinkelspelzmasse zur Kompostverbesserung, insbesondere zur Beschleunigung der mikrobiologischen Vorgänge im Kompost eingesetzt werden.

Bei einer weiteren Verfahrensvariante wird anstelle oder zusätzlich zu unbehandeltem Dinkelspelz ein aus gemahlenem Dinkelspelz oder Dinkelkorn gewonnenes Mehl zur Herstellung des Absudes verwendet.

Alternativ oder zusätzlich kann auch eine aus verbranntem Dinkelspelz gewonnene Asche verwendet werden.

Besonders bevorzugt ist eine Verfahrensvariante, bei der vorzugsweise nach der Verdünnung des Absudes aus Dinkelspelz-Extrakt schwache Säure, insbesondere 1 - 2 Volumen-% Zitronensäure oder Essigsäure, vorzugsweise Apfelessig, und/oder 0,5 - 0,8 Volumen-% Milchsäure beigemischt wird. Die leichte Aufsäuerung des Dinkelspelz-Extraktes dient der Gärungsförderung zur Verhinderung von Schimmelpilzbildung im Extrakt aufgrund der antioxidanten Wirkung der Gärungsprodukte wie Alkohole und Ketone.

Vor der Verdünnung kann auch dem für die Verdünnung vorgesehenen Wasser ca. 0,01 bis 0,1 g/l, vorzugsweise etwa 0,05 g/l feingemahlenes Pulver von siliziumhaltigen Mineralien als Silizium-Zugabe beigemischt, die Flüssigkeit mit Druckluft aufgeschäumt und anschließend mit dem Absud vermengt wird. Auf diese Weise wird die Siliziumzugabe besonders wirkungsvoll in das Pflanzenbehandlungsmittel eingebracht. Das Aufschäumen kann insbesondere mit Hilfe eines Kompressors bewirkt werden.

Bei einer alternativen Verfahrensvariante wird die Silizium-Zugabe in Form von feingemahlenem Pulver von siliziumhaltigen Mineralien dem für die Herstellung des Absudes aus Dinkelspelz-Extrakt vorgesehenen Wasser beigemischt. Auch hier kann wiederum Druckluft zum Aufschäumen und zur besseren Verteilung der Silizium-Zugabe im Wasser eingesetzt werden.

Zur Verbesserung der Eigenschaften des erfindungsgemäßen Pflanzenbehandlungsmittels kann, wie oben erwähnt, ein Zusatz von Lavendelabsud, Fichten- oder Tannenabsud und/oder Rosenwasser beigemischt werden. Auch andere Zusätze, wie beispielsweise Harz, Öl oder Kalkpulver können bestimmte positive Eigenschaften des erfindungsgemäßen Pflanzenbehandlungsmittels modifizieren oder ohnehin vorhandene Wirkungen noch weiter verstärken. Insbesondere bei Zusatz von in Öl gelösten Kräuterextrakten (z.B. Lavendelöl) empfiehlt sich die Beimischung von etwas Milch, um eine Suspension im Wasser zu erhalten.

Vor der Verwendung sollte das erfindungsgemäße Pflanzenbehandlungsmittel nochmals mit Wasser im Verhältnis 1:10 bis 1:50, vorzugsweise etwa 1:20 nachverdünnt werden, um nicht durch zu starke Konzentration die zu behandelnden Pflanzen zu beschädigen.

Zur Homogenisierung der Siliziumzugabe, die sich möglicherweise bei längerer Lagerzeit des erfindungsgemäßen Mittels absetzen kann, wird empfohlen, das Pflanzenbehandlungsmittel vor oder während der Nachverdünnung aufzuschäumen, beispielsweise mittels Druckluft.

In den Rahmen der vorliegenden Erfindung fällt auch die Verwendung des oben beschriebenen Pflanzenbehandlungsmittels als Düngemittel zur Wachstumsförderung sowie zur Qualitäts- und Ertragssteigerung von Nutzpflanzen und ihren Früchten. Für diese Anwendung kann das Mittel beispielsweise ins Gießwasser beigegeben oder die Pflanzen mit einer entsprechend verdünnten Lösung bespritzt oder besprüht werden.

Weiter kann das erfindungsgemäße Pflanzenbehandlungsmittel als Fungizid und/oder Herbizid zur Wachstumshemmung von pflanzlichen oder mikrobiologischen Schädlingen verwendet werden. Insbesondere sind dann die zu behandelnden Pflanzen in einem frühen Wachstumsstadium, vorzugsweise im zwei-keimblättrigen Stadium mit dem verdünnten Mittel zu spritzen, um optimalen Erfolg zu erzielen. Beispielsweise bei einer Behandlung von Rasenflächen entfaltet das Mittel eine hervorragende herbizide Wirkung und unerwünschte Unkräuter und Pilze veröden bzw. werden vom Gras überwuchert.

Ein weiteres Anwendungsgebiet des erfindungsgemäßen Pflanzenbehandlungsmittels liegt in der Bekämpfung von Pflanzenschädlingen wie beispielsweise Blattläusen, insbesondere bei rosenartigen Gewächsen oder z.B. Borkenkäfern oder Dickmaulrüsselkäfern, wo ebenfalls hervorragende positive Wirkungen beobachtet wurden.

Eine weitere erfindungsgemäße Verwendung des Pflanzenbehandlungsmittels liegt im Schutz gegen schädliche Wirkungen der Sonneneinstrahlung auf Pflanzen, insbesondere zur Ausfilterung von UV-Anteilen im Sonnenlicht und/oder zur Erhöhung der Hitzeverträglichkeit der behandelten Pflanzen. Gute Erfolge wurden beispielsweise beim Besprühen von Rhododendron-Blättern und Taxus-Hecken mit dem erfindungsgemäßen Pflanzenbehandlungsmittel erzielt.

Desweiteren dient das erfindungsgemäße Pflanzenbehandlungsmittel aber auch als Schutz gegen schädliche Frostwirkungen auf Pflanzen bzw. zur Erhöhung der Kälteverträglichkeit der behandelten Pflanzen.

Ein weiteres Anwendungsfeld des erfindungsgemäßen Pflanzenbehandlungsmittels liegt in der Behandlung von Umweltschäden, insbesondere an Bäumen und Sträuchern, die sich vor allem durch dürre Äste, braune Blätter bzw. Nadeln manifestieren und nach der Behandlung mit dem Mittel, insbesondere durch mehrfaches Besprühen, merklich zurückgehen.

Desweiteren dient das erfindungsgemäße Pflanzenbehandlungsmittel zum Verschluß und zur Desinfektion von pflanzlichen Wunden, Schnittflächen, Rissen etc.. Insbesondere können so bei Bäumen schadhafte Stellen in der Rinde oder im Stamm erfolgreich behandelt werden.

Ein weiteres Anwendungsgebiet des erfindungsgemäßen Pflanzenbehandlungsmittels liegt in der Erhöhung der Haltbarkeit von Schnittblumen, die bei Zugabe des Mittels zum Blumenwasser in der Vase vermutlich durch Desinfektion der Schnittflächen am Blumenstengel ungefähr auf das Doppelte erhöht wird, so daß sich die Schnittblumen in der Vase erheblich länger frisch erhalten.

Vorteilhaft können mit dem erfindungsgemäßen Pflanzenbehandlungsmittel aber auch Gewässer zum Schutz gegen übermäßigen Algenwuchs behandelt werden. Auch hier wurden beispielsweise in Gartenteichen erstaunliche Erfolge beobachtet. Die Wirkungsweise ist hier vermutlich ähnlich wie die oben beschriebene herbizide Wirkung des Mittels.

Vorzugsweise erfolgt der Einsatz des erfindungsgemäßen Pflanzenbehandlungsmittels für Grünpflanzen bei Tau und Sonnenschein im Frühjahr und im Sommerhalbjahr jeweils am frühen Vormittag, insbesondere zwischen etwa 7.00 Uhr und 9.00 Uhr morgens.

Die Verwendung des erfindungsgemäßen Pflanzenschutzmittels erschöpft sich nicht mit den oben aufgezählten bevorzugten Verwendungsbeispielen. Die gezeigten und beschriebenen Ausführungsformen sind nicht als abschließende Aufzählung zu verstehen, sondern haben vielmehr beispielhaften Charakter für die Schilderung der Erfindung. Die vorstehend genannten Merkmale können erfindungsgemäß einzeln für sich oder zu mehreren in beliebigen Kombinationen Anwendung finden.

## Patentansprüche

1. Pflanzenbehandlungsmittel auf der Basis von Wasser, einem organischen Bestandteil und Silizium,
dadurch gekennzeichnet,
daß das Pflanzenbehandlungsmittel 2/3 bis 4/5, vorzugsweise etwa 3/4 Volumenanteile Wasser, 1/5 bis 1/3, vorzugsweise etwa 1/4 Volumenanteil Dinkelspelz-Extrakt und einen Volumentanteil von Silizium und/oder Siliziumverbindungen von weniger als 1‰, vorzugsweise in der Größenordnung 1 ppm zum Gesamtvolumen enthält.

2. Pflanzenbehandlungsmittel nach Anspruch 1, dadurch gekennzeichnet, daß der Dinkelspelz-Extrakt aus einem Gärungsprozeß von natürlichem Dinkelspelz, vorzugsweise aus einer bakteriellen Gärung hervorgegangen ist.

3. Pflanzenbehandlungsmittel nach Anspruch 1 oder 2, dadurch gekennzeichnet, daß die Siliziumverbindungen Quarzpulver enthalten.

4. Verfahren zur Herstellung eines Pflanzenbehandlungsmittels nach einem der vorhergehenden Ansprüche, dadurch gekennzeichnet, daß Dinkelspelz in einem Volumenverhältnis von ungefähr 3:5 mit Wasser versetzt und vorzugsweise etwa einen halben Tag bei Zimmertemperatur eingeweicht, sodann ca. 1/4 bis 1/2 Stunde, vorzugsweise etwa 20 min erhitzt, insbesondere aufgekocht, anschließend abgesiebt und ausgedrückt und schließlich das so gewonnene Dekokt aus Dinkelspelz-Extrakt in einem Volumenverhältnis von ungefähr 1:3 mit vorzugsweise kaltem Wasser verdünnt wird, und daß das Pflanzenbehandlungsmittel mit einer Silizium-Zugabe von weniger als 1‰, vorzugsweise etwa 1 ppm des Gesamtvolumens versetzt wird.

5. Verfahren nach Anspruch 4, dadurch gekennzeichnet, daß vorzugsweise nach der Verdünnung schwache Säure, insbesondere 1 - 2 Volumen-% Zitronensäure oder Essigsäure, vorzugsweise Apfelessig, und/oder 0,5 - 0,8 Volumen-% Milchsäure, dem Dinkelspelz-Extrakt beigemischt wird.

6. Verfahren nach Anspruch 4 oder 5, dadurch gekennzeichnet, daß anstelle oder zusätzlich zu ungemahlenem Dinkelspelz ein aus gemahlenem Dinkelspelz oder Dinkelkorn gewonnenes Mehl verwendet wird.

7. Verfahren nach einem der Ansprüche 4 bis 6, dadurch gekennzeichnet, daß anstelle oder zusätzlich zu Dinkelspelz eine aus verbranntem Dinkelspelz gewonnene Asche verwendet wird.

8. Verfahren nach einem der Ansprüche 4 bis 7, dadurch gekennzeichnet, daß das Pflanzenbehandlungsmittel vor der Verwendung nochmals mit Wasser im Verhältnis 1:10 bis 1:50, vorzugsweise etwa 1:20 nachverdünnt wird.

9. Verfahren nach Anspruch 8, dadurch gekennzeichnet, daß das Pflanzenbehandlungsmittel vor oder während der Nachverdünnung mit Druckluft aufgeschäumt wird.

10. Verwendung des Pflanzenbehandlungsmittels nach einem der vorhergehenden Ansprüche als Düngemittel zur Wachstumsförderung sowie zur Qualitäts- und Ertragssteigerung von Nutzpflanzen und deren Früchten.

11. Verwendung des Pflanzenbehandlungsmittels nach einem der vorhergehenden Ansprüche als Fungizid und/oder Herbizid zur Wachstumshemmung von pflanzlichen oder mikrobiologischen Schädlingen.
